(19) Europäisches Patentamt
European Patent Office
Office européen des brevets

(11) **EP 2 604 072 B1**

(12) **EUROPEAN PATENT SPECIFICATION**

(45) Date of publication and mention
of the grant of the patent:
**18.07.2018 Bulletin 2018/29**

(21) Application number: **10855968.3**

(22) Date of filing: **13.08.2010**

(51) Int Cl.:
**H04W 28/18** (2009.01)    **H04W 8/22** (2009.01)

(86) International application number:
**PCT/SE2010/050885**

(87) International publication number:
**WO 2012/021098 (16.02.2012 Gazette 2012/07)**

(54) **DUAL OPERATION OF USER EQUIPMENT IN LICENSED AND UNLICENSED SPECTRUM**

DOPPELBETRIEB EINES BENUTZERGERÄTS IN EINEM LIZENZIERTEN UND EINEM UNLIZENZIERTEN FREQUENZBAND

FONCTIONNEMENT DOUBLE D'UN ÉQUIPEMENT D'UTILISATEUR DANS UN SPECTRE AVEC LICENCE ET SANS LICENCE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**19.06.2013 Bulletin 2013/25**

(73) Proprietor: **Telefonaktiebolaget LM Ericsson (publ)**
**164 83 Stockholm (SE)**

(72) Inventors:
• **KAZMI, Muhammad**
  **S-167 39 Bromma (SE)**
• **FODOR, Gabor**
  **S-165 52 Hässelby (SE)**
• **BEHRAVAN, Ali**
  **S-113 21 Stockholm (SE)**

(74) Representative: **Ericsson**
**Patent Development**
**Torshamnsgatan 21-23**
**164 80 Stockholm (SE)**

(56) References cited:
**US-A1- 2009 221 290**

• **3gpp: "'Evolved Universal Terrestrial Radio Access (E-UTRA); User Equipment (UE) radio access capabilities", 3GPP TS 36.306 V9.2.0, 1 June 2010 (2010-06-01), XP055121257, Retrieved from the Internet: URL:http://www.3gpp.org/ftp/specs/html-info/36306.htm [retrieved on 2014-06-03]**
• **'Evolved Universal Terrestrial Radio Access (E-UTRA); User Equipment (UE) radio access capabilities (Release 9)' 3GPP TS 36.306 V9.2.0, [Online] June 2010, XP055121257 Retrieved from the Internet: <URL:http://www.3gpp.org/ftp/specs/html-info/36306.htm>**
• **STEVENSON, CARL R. ET AL.: 'Functional Requirements for the 802.22 WRAN Standard' IEEE 802.22-05/0007R48 29 November 2006, XP055027519**
• **'Evolved Universal Terrestrial Radio Access (E-UTRA); User Equipment (UE) radio transmission and reception (Release 9)' 3GPP TS 36.101 V9.4.0, [Online] June 2010, XP055121286 Retrieved from the Internet: <URL:http://www.3gpp.org/ftp/specs/html-info136101.htm>**

## Description

### TECHNICAL FIELD

The present invention is generally related to wireless communication systems and wireless communication devices, and is more particularly related to techniques for controlling operation of wireless devices capable of operating in both licensed and unlicensed spectrum using the same or differing radio access technologies.

### BACKGROUND

Currently there is a large variety of wireless mobile devices (including mobile phones, wireless personal digital assistants, wireless-equipped laptop computers, and the like) that are capable of obtaining a wide range of different services through connections to one or more of several differing radio access networks. As a result, the range of capabilities in mobile devices is quite wide. For example, in the 3$^{rd}$-Generation Partnership Project's (3GPP's) specifications for the so-called Long-Term Evolution (LTE) wireless system (Release 8 and later), compatible mobile terminals (user equipment, or UEs, in 3GPP terminology) are classified into five categories relating only to their LTE uplink and downlink capabilities; each of these categories is associated with a large number of parameters. (See, for example, 3GPP TS 36.306, "E-UTRA User Equipment Radio Access Capabilities," Release 9). In addition to belonging to one of these categories, each UE is further characterized by a number of parameters, such as the maximum number of uplink/downlink shared channel (UL/DL SCH) transport block bits that can be received within a transmission time interval (TTI), antenna transmission modes or capabilities, the maximum number of supported layers for spatial multiplexing, support for 64 QAM modulation, radio frequency parameters, measurement parameters (capabilities), supported frequency bands, etc.

In order for 3GPP radio access networks to provide services to this wide range of terminals, the 3GPP has defined radio resource control (RRC) signaling procedures that allow a UE to signal its capabilities (including the supported frequency bands and radio access technologies) to the radio access network (RAN). The RAN respects the signaled UE radio access capability parameters when configuring and scheduling the UE. In fact, the UE capabilities are one of the main drivers (specified by 3GPP TS 36.300 Annex E) for inter-frequency and mobility between different radio access technologies (RATs), such as between LTE and W-CDMA.

On the other hand, the RAN signals to the UE what frequencies it should use for making signal measurements to support intra- and inter-band mobility. These frequencies can all be within the same RAT or may be between different RATs. All LTE and UTRA (Universal Terrestrial Radio Access) frequency bands are common. Hence LTE and Wideband Code-Division Multiple Access (WCDMA), and in some cases even GSM, can co-exist in the same frequency band. Thus, frequency (channel) numbering has a strong relation to the UE measurement capabilities. For example, the frequency (channel) numbering scheme for E-UTRA is defined by means of a frequency raster with a particular granularity (e.g., 100 kHz). The frequency raster identifies the frequency positions of the control channel used for cell search by the UEs. It follows, then, that the frequency raster and the associated (channel) numbering scheme must be defined to support intra- and inter-band mobility. For instance, for E-UTRA (Evolved-UTRA), the frequency numbering is defined in the 3GPP specifications 3GPP TS 36.101 and 3GPP TS 36.104. Similarly, the frequency numbering for UTRA FDD is defined in the 3GPP specifications TS 25.101 and TS 25.104.

In order to simplify the frequency search, or the so-called initial cell search, the center frequency of each radio channel is specified to be an integer multiple of a well defined (generally fixed) number. This number is known as the channel raster or frequency raster. This enables the UE to tune its local oscillator only to multiples of the raster, while assuming it to be the center frequency of the channel being searched. The channel raster in WCDMA is generally 200 KHz, but is 100 KHz for certain channels and bands. In LTE, the channel raster for all channels (i.e., all bandwidths) is 100 KHz. The channel raster directly impacts the channel numbering, which is described in the next section.

There is a trade-off between shorter and larger channel raster granularities. If the raster is too small, then the UE has to consider more hypotheses regarding the location of the center frequency of a channel when performing the frequency search. On the one hand this increases the cell search delay, and on the other hand it increases UE power consumption, leading to battery drainage. However, a guard band between adjacent channels within the same or between different operators is typically introduced to reduce the adjacent channel interference or the effect of out of band emissions. Therefore, an unnecessarily large raster would lead to the wastage of frequency band due to the coarser resolution of guard bands.

Although the typical operation of cellular systems takes place in spectrum bands licensed to a specific cellular operator within a geographical region, operating cellular technologies in unlicensed bands is known to have some attractive features. For example, the feasibility and main technical characteristics of operating 3GPP High Speed Packet Access (HSPA) systems in unlicensed spectrum traditionally used by 802.11-compatible wireless local area networks (WLAN) have been studied. Allowing cellular base stations and user equipments to operate in unlicensed bands offers several advantages. First, it increases the bandwidth that is available for user data. Second, it may reduce the interference in the licensed bands, since some traffic is steered to the unlicensed bands. Third, this approach may make use of underutilized or wholly unused frequency resources.

US 20090221290 A1 discloses a system and a method of signal transmission/reception by a mobile station in a wireless communication system. The method includes: transmitting a first sub-band preparation indicator, which indicates that the mobile station has been prepared for transmission/reception of a signal through a first sub-band, to a base station through a primary band; transmitting a first sub-band failure indicator to the base station through the primary band upon detecting failure in transmitting the first sub-band preparation indicator; receiving sub-band information on a second sub-band, which is different from the first sub-band, from the BS through the primary band; and acquiring synchronization with the second sub-band, so as to enable transmission/reception of a signal through the second sub-band based on the sub-band information. In this document, Table 1 indicates that sub-band information acquired from the base station may contain a frequency band index and a channel frequency step size.

## SUMMARY

The above shortcomings of the prior art and problems are solved by the features defined in independent claims, with additional aspects being defined in the dependent claims. To support operation of mobile terminals in both licensed and unlicensed frequency bands, several embodiments of the present invention use a combination of standardized or predefined parameters, signaled in a first frequency band, that define the frequency raster points to be used in a second frequency band. Although none, either, or both of these frequency bands may be unlicensed frequency bands, in various embodiments, the techniques described herein are expected to find particular applications in embodiments in which the first frequency band is a licensed frequency band, carrying communications according to a particular wireless standard, and in which the second frequency band is an unlicensed frequency band.

In any of these embodiments, these parameters are communicated using signaling messages between the wireless communication device and the radio access network (RAN) that allow the wireless device and the RAN to exchange information regarding the device's capabilities, preferences, transmission power, etc. This signaling mechanism allows the RAN and the mobile terminal to handle the tradeoff between using a potentially scarce resource (licensed spectrum bands) that can provide some assurance of good quality of service, and using unlicensed spectrum bands at lower power levels, with increased potential for exposure to uncontrolled interference sources.

One example of the several possible embodiments is a method implemented in a wireless communication device configured to operate in at least first and second frequency bands. Either or both of the first and second frequency bands may be unlicensed frequency bands. This method comprises accessing a radio access network using a first radio access mode and the first frequency band, and further comprises transmitting frequency raster data to the radio access network, wherein the frequency raster data corresponds to the second band, indicates a tuning capability of the wireless communication device, and comprises at least a first frequency index and a granularity indicator. In some embodiments, the granularity indicator directly indicates a raster granularity, while in others, the granularity indicator comprises an index to one or more of a plurality of pre-determined raster granularities. In still others, the granularity indicator comprises a scaling factor for application to a pre-determined raster granularity.

In some embodiments, the wireless communication device is configured to operate in a second radio access mode in the second frequency band, in which case the first frequency index and the granularity index correspond to the second radio access mode. In some embodiments, the second frequency band corresponds to unlicensed spectrum. In any of these embodiments, a tuning capability corresponding to the first radio access mode and the first frequency band comprises a pre-determined first frequency-step size, such that the granularity indicator corresponds to a second frequency-step size differing from the first frequency-step size. Likewise, in these and other embodiments the first frequency index indicates a first end of the second frequency band and the frequency raster data further comprises a second frequency index indicating a second end of the second frequency band.

In some embodiments, the method further comprises receiving a tuning resolution parameter at the wireless communication device, from the radio access network, and applying the tuning resolution parameter to one or more operations of the wireless communication device in the second frequency band. These operations can include, for example, frequency synchronization, symbol level synchronization, slot synchronization, sub-frame synchronization, frame synchronization, signal strength measurement, signal quality measurement, cell identification, tuning to a common or user-specific control channel, tuning to a data channel, and tuning to an access channel.

In any of these or in other embodiments, the method further comprises receiving a maximum-power parameter at the wireless communication device, from the radio access network, the maximum-power parameter indicating a first transmitter-power limit that corresponds to the second frequency band and that differs from a pre-determined transmitter power-limit corresponding to the first radio access mode and the first frequency band. The first transmitter-power limit is subsequently applied to one or more operations of the wireless communication device in the second frequency band.

In any of these or in still other embodiments, the method further comprises transmitting, from the wireless communication device to the radio access network, a band preference parameter indicating acceptability of assignment to operation in the second frequency band. In some embodiments in which the wireless communication device is configured to operate in a second radio access mode in the second frequency band, a mode preference parameter indicating acceptability of assignment to operation in the second radio access mode may be transmitted in addition to or instead of the band preference parameter. In any of these embodiments, the mode preference parameter or the band preference parameter, or both, may be determined based on a measurement of a signal quality in the second frequency band. In these and other embodiments, the mode preference parameter, or the band preference parameter, or both, may be based on a cost factor corresponding to the second radio access mode or the second frequency band, or both.

Another embodiment is implemented in or in connection with a radio access network, and is for controlling operation of a wireless communication device configured to communicate with the radio access network in a first radio access mode and in a first frequency band and further configured to operate in a second frequency band. This method comprises receiving frequency raster data from the wireless communication device, wherein the frequency raster data corresponds to the second frequency band, indicates a tuning capability of the wireless communication device, and comprises at least a first frequency index and a granularity indicator. The method further comprises determining one or more device configuration parameters based on the frequency raster data, and transmitting the one or more device configuration parameters to the wireless communication device.

In some embodiments, the wireless communication device is configured to operate in a second radio access mode in the second frequency band, in which case the first frequency index and the granularity index correspond to the second radio access mode. The second frequency band corresponds to unlicensed spectrum, in some embodiments.

In any of the embodiments of this method, the one or more device configuration parameters may include a maximum-power parameter indicating a first transmitter-power limit that corresponds to the second frequency band and that differs from a pre-determined transmitter power-limit corresponding to the first radio access mode and the first frequency band. Similarly, the one or more device configuration parameters may include a tuning resolution parameter for application by the wireless communication device to one or more operations in the second frequency band. Likewise, the one or more device configuration parameters may comprise an assignment to operation in a second radio access mode, or an assignment to operation in the second frequency band, or both, in some embodiments.

In some embodiments, the wireless communication device is configured to operate in a second radio access mode in the second frequency band, in which case the method may further comprise receiving, from the wireless communication device, a mode preference parameter indicating acceptability of assignment to operation in the second radio access mode, or a band preference parameter indicating acceptability of assignment to operation in the second frequency band, or both. In these embodiments, the one or more device configuration parameters transmitted by the RAN are based, at least in part, on the mode preference parameter, or the band preference parameter, or both.

In still other embodiments, a network node is configured to maintain a database of access point capabilities for access points corresponding to the second frequency band. In some of these embodiments, the device configuration parameters discussed above are determined based on one or more of the access point capabilities. In some cases, a database of signal strengths for signals in the second frequency band is maintained, and the device configuration parameters are determined based on the signal strengths. In these and other embodiments, the network node may be configured to receive availability data from one or more access points corresponding to the second frequency band, over one or more backhaul links, and to determine the device configuration parameters based on the access point availability.

In addition to the methods summarized above, corresponding wireless communication devices and radio access network nodes are described herein. The present invention, of course, is not limited to the specific embodiments summarized above, but may be carried out in other ways than those specifically set forth herein without departing from essential characteristics of the invention. Thus, all variations coming within the meaning and of the appended claims are intended to be embraced therein.

**BRIEF DESCRIPTION OF THE DRAWINGS**

Figure 1 illustrates a wireless network that includes macro cell coverage and hot-spot coverage.
Figure 2 is a table illustrating the E-UTRA channel number scheme.
Figure 3 is a table comparing power limits in unlicensed bands in Europe and the United States.
Figure 4 illustrates a mobile terminal and base station according to some embodiments of the invention.
Figure 5 is a process flow diagram illustrating a method for operating a wireless communication device configured to operate in multiple frequency bands.
Figure 6 is a process flow diagram illustrating a method for controlling a wireless communication device configured to operate in multiple frequency bands.

## DETAILED DESCRIPTION

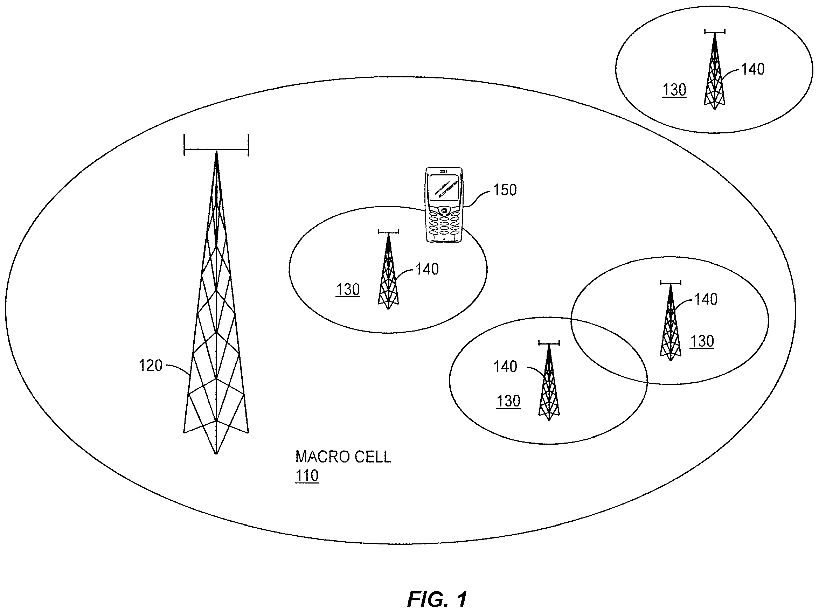

Figure 1 illustrates a wireless system that combines traditional cellular services with so-called hot-spot services. A single operator may provide both services within the coverage area of its PLMN (Public Land Mobile Network), providing the hot-spot coverage through several unlicensed bands and the cellular coverage with licensed bands. As seen in the figure, several hot-spot areas 130 utilizing unlicensed spectrum may overlap with the cellular coverage of macro cell 110, and may overlap with one another. The hot-spot coverage may be provided by so-called micro base stations 140, with low transmission powers pursuant to government regulations for operation in unlicensed spectrum. Cellular coverage may be provided by conventional, or "macro," base stations, such as the pictured base station 120. A mobile terminal 150 may be able to obtain service from either a hot-spot 130 or from the macro cell 110, depending on the terminal's location.

Although extending the use of cellular mobile terminals to unlicensed spectrum offers several advantages, a number of problems arise from the integration of access points operating in licensed and unlicensed spectrum bands. Some of these problems stem from the fact that a cellular operator (i.e., an "owner" of licensed spectrum) does not own the unlicensed spectrum resources. Thus, the availability and interference situation in those frequency bands are out of the operator's control. This is in stark contrast to the situation in the licensed frequency bands, where the operator is able to control access, and has some control over interference levels. For example, the X2 type of approaches for performing inter-cell interference coordination (ICIC), which is commonly used by 3GPP Long Term Evolution (LTE) systems, facilitate cooperation between entities under the operator's control to manage interference within the operator's licensed frequency band. In order to realize these ICIC schemes, different types of measurements performed by the eNode B are exchanged between the eNode Bs over the X2 interface in E-UTRAN (commonly known as LTE). Thus, there is a need to provide efficient and satisfactory operation (including mobility and interference management) of integrated systems, resulting in good resource utilization and predictable quality-of-service (QoS) for users.

While the use of cellular technologies such as HSPA and LTE in unlicensed spectrum has been discussed in the literature, several problems need to be solved. In this scenario a cellular operator provides radio access to dual- (or multiple-) band UEs by means of a mixture of cellular base stations operating in one or more licensed frequency bands (e.g., using LTE technology) and micro base stations operating in the unlicensed band. Some of the micro base station coverage areas may overlap with the coverage area of the macro cellular system, while other such hot-spot areas may be out of the coverage area of the cellular system.

In the licensed frequency bands, the RAN acquires information about UE capabilities such as the supported band list (supportedBandListEUTR, in LTE systems). In the same way, a RAN supporting handsets capable of operating in the mixed scenario described above needs to get information about the capabilities of the UE applicable to the unlicensed spectrum. However, today there is no approach specified for how the RAN should acquire this knowledge.

Operating requirements for unlicensed bands may not be well specified, or may not cover all possible scenarios. In order for the UE to comply with regulatory requirements (e.g., emission limits), the UE must know the maximum radiated power that it may use in a specific (non-licensed) frequency band in a specific region or locality. Thus, another problem for the UE that supports operation in both licensed and unlicensed spectrum is how the UE acquires this information.

Furthermore, the maximum UE radiated power must typically be much lower and the interference situation can be much different in the unlicensed bands (due to unpredictable interference sources including non-communications equipments including microwave ovens, electronic devices in general, electronic medical equipment etc). Thus, the quality of service experienced by a UE can be drastically different depending on whether it is operating in a licensed or unlicensed band. Thus, yet another problem regards how the RAN and UE should communicate and take into account user preferences regarding which band the UE should operate in. For example, the RAN should be able to consider UE preferences and memberships in closed subscriber groups (CSG) when deciding which band the RAN should direct the UE to. These same factors, and others, might also be considered in determining what should be charged for that service. For instance, operating in an unlicensed band should cost less than allowing the UE to use licensed band spectrum.

The RAN needs sufficient information to decide on handovers between the licensed and unlicensed bands. For example, the RAN should not command a handover into an micro base station operating in an unlicensed band if the interference is too high in that band. Thus another problem regards how the RAN obtains information regarding the interference situation in the unlicensed band.

Several embodiments of the present invention address one or more of the above-identified problems by using a combination of standardized or otherwise predefined parameters that define the frequency raster points to be used in the unlicensed band. These parameters can be used in signaling messages between the UE and the RAN that allow the UE and the RAN to exchange information regarding UE capabilities, UE preferences, UE transmission power, etc.

As will be demonstrated more completely below, this signaling mechanism allows the RAN and the UE to handle the tradeoffs between using a potentially scarce resource (licensed spectrum bands), which may provide some QoS guarantees, and using unlicensed spectrum bands, with lower power levels and a higher potential for exposure to uncontrolled interference sources.

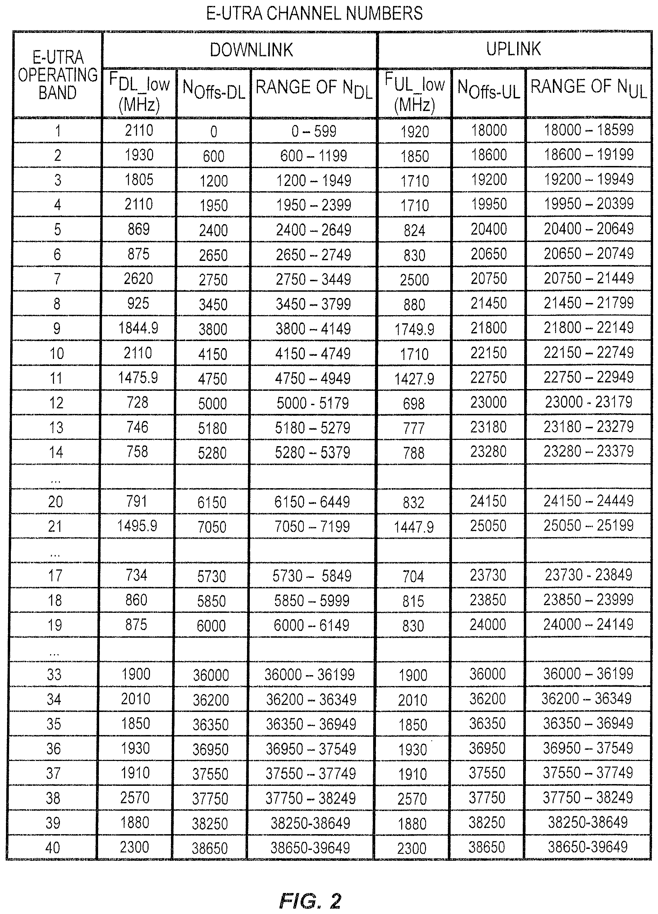

The first step of the solution, in several embodiments of the invention, is that the HSPA and E-UTRA operating bands are extended beyond the existing licensed bands, which are currently numbered from 1 to 40 in 3GPP specifications. Thus each operating band, whether in licensed or unlicensed spectrum, is defined in terms of the downlink and uplink E-UTRA Absolute Radio Frequency Channel Numbers (EARFCN) in a similar fashion as that used for the licensed bands. Figure 2 is a reproduction of the channel numbering scheme employed in E-UTRA systems (as documented in 3GPP TS 36.101, v. 9.3.0, March 2010). In this scheme, each carrier frequency in the uplink and downlink is designated by an "E-UTRA Absolute Radio Frequency Channel Number," or "EARFCN," in the range 0 - 65535. The relationship between an EARFCN and the carrier frequency in MHz, for downlink channels, is given by the following equation, where $F_{DL\_LOW}$ and $N_{Offs-DL}$ are given in Figure 2, and $N_{DL}$ is the downlink EARFCN:

$$F_{DL} = F_{DL\_LOW} + 0.1(N_{DL} - N_{Offs-DL}) \quad . \quad\quad\quad (1)$$

Here, the channel raster is 0.1 (100 kHz).

Similarly, the relation between EARFCN and the carrier frequency in MHz for the uplink is given by the following equation, where $F_{UL\_LOW}$ FUL_low and $N_{Offs-UL}$ are given in table 5.7.3-1 and NUL is the uplink EARFCN.

$$F_{UL} = F_{UL\_LOW} + 0.1(N_{UL} - N_{Offs-UL}) \quad . \quad\quad\quad (2)$$

Again, the channel raster is 0.1 (100 kHz).

Those skilled in the art will appreciate that this scheme can easily be extended to cover other bands, including unlicensed bands. Furthermore, this scheme or an extended scheme can also be readily adapted to other channel rasters, i.e., to channel rasters other than 100 kHz. Thus, for example, a default set of channels or frequency raster points having a granularity of 100 kHz (or other spacing defined by a channel raster) is defined, such that the carrier center frequency must be an integer multiple of 100 kHz in all unlicensed bands supported by the system. To accommodate unlicensed bands and/or radio access technologies that don't conform to this default set of raster points, the UE can be configured to explicitly signal the raster points on which the UE is capable of performing measurements. For example, the format < lowest frequency; frequency granularity, highest frequency >, might be used. Of course, other formats might also be used, such as < lowest frequency; frequency granularity, # of channels >. UEs might signal more than one set of non-standard frequency raster data in this manner, in some cases.

In this way, the UE can inform the RAN (e.g., the base station) of its key non-licensed radio-frequency (RF) capabilities, if these capabilities are different from the default raster point capabilities, using a simple signaling format. This information is likely to be necessary in many scenarios, since there is a much broader set of potential bands in the unlicensed spectrum than those in the licensed spectrum. Furthermore, it is simply not efficient to have the same fixed frequent raster points in all unlicensed frequency bands, given the variety of bands and the variety of radio access technologies.

In some cases, there will be limited or non-existent mobility between the unlicensed bands. Nonetheless, the UE may not be required to quickly perform neighbor cell search on cells belonging to unlicensed bands. Depending upon the scenario, a frequency raster with much finer resolution than typically used in licensed bands might be employed in unlicensed bands. This will also enable more efficient use of the unlicensed spectrum. Allowing control of a UE according to a non-fixed frequency raster value provides several advantages. For instance, in a given unlicensed band it may be desirable to dynamically or semi-statically use a finer frequency raster in the event that a small guard band is required for protection outside the unlicensed band, especially if the target channel (e.g., for measurement, or for handover) is at the band edge. On the other hand, it may be preferred to use a coarser frequency raster in that same unlicensed band in the event the unlicensed band is to be implicated in some level of mobility, e.g., for purposes of cell identification, measurements required from cells operating in the unlicensed bands, etc.

The center frequency of each channel to which the UE tunes is an integer multiple of the channel raster. To facilitate mobility, the UE is required to identify cells, perform neighbor cell measurements, and report the performed measurements to the serving cell. The serving cell uses the reported measurements for performing handover. To identify an unknown cell the UE must find the center frequency of the channel transmitted by the cell. Hence, a coarser raster requires the UE to consider fewer hypotheses for identifying the unknown cell. A coarser raster also reduces UE complexity (e.g., reduced processing and memory requirements) and lowers the UE power consumption. On the other hand, a channel raster with finer resolution is desirable in the event that a guard band is required for the protection outside the unlicensed band or outside the bandwidth of operation. This is due to the fact that finer raster gives an operator more flexibility in choosing the guard band between the operating bandwidths of its own frequency channel and other frequency channels (e.g. belonging to other operators). For example, one operator might require 250 KHz of guard band between channel C1 and channel C2. If the channel raster is 50 KHz, then the required guard band can be implemented without any wastage of the available bandwidth. However, if the channel raster is 200 KHz, then the guard band of 250 KHz would result in wastage of 150 KHz of the bandwidth. This is because the guard band requirement in this example can only be met by using 2 channel raster points. An intermediate raster or a default value might be desired in other situations.

A more complex UE implementation (i.e., having more sophisticated tuning capabilities) will support a finer frequency raster. Such a UE may also support a given coarse raster, especially if it is a multiple of the smallest frequency raster supported by the UE. Such a UE can search an unlicensed band operating in all of the above three scenarios. On the other hand, a low-end UE supporting only a coarser frequency raster may not be able to search for unlicensed bands operating with finer frequency raster. Thus, in several embodiments of the present invention the UE reports its raster capability to the serving radio network node, which in turn could provide the absolute frequency number of channels currently used in unlicensed band. For instance, a UE supporting coarser raster can access an unlicensed band in the first scenario described above, provided that it receives the absolute frequency number(s) of channels used in that band. This is because the UE can implement a coarser raster with lower complexity, memory requirement, processing and power consumption compared to those required for the finer raster.

Accordingly, some embodiments of the invention include the dynamic setting of the frequency raster in a base station operating in an unlicensed band, where the setting depends on the scenario. In some embodiments, a UE is configured to report its raster capability to the base station (or other RAN node), indicating its support for non-standard bands and/or rasters. Thus, for example, the UE might signal that it supports a raster smaller than the usual one standardized for a base station operating in licensed band. In some cases, the UE may be configured to transmit frequency raster data that indicates a tuning capability of the UE, where the frequency raster data includes a first frequency index (such as a low-end of a frequency band) and a granularity indicator that indicates a supported raster, or step size, within a particular band. In these and in other embodiments, a base station operating in a licensed band may be configured to provide assistance information to the UE about the frequency raster(s) currently used by one or more base stations operating in unlicensed bands in the proximity of the UE. These three aspects of various embodiments are all related to the use of an "adaptive" frequency raster.

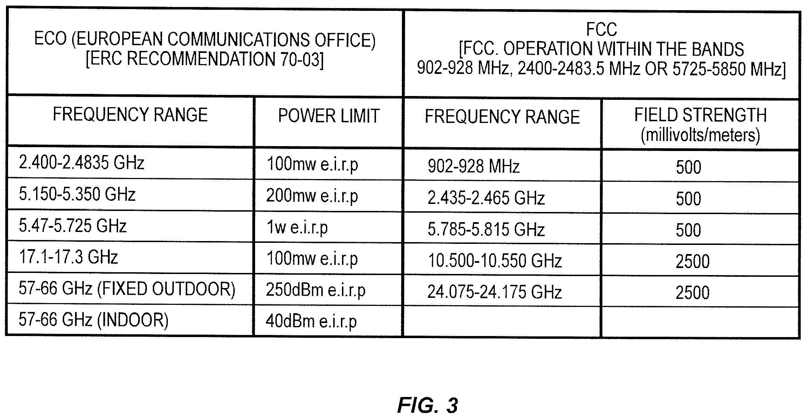

In some embodiments, once a RAN knows of the frequency bands, including unlicensed frequency bands, that a UE is capable of accessing (and later on also of the specific frequency band that the UE uses for a specific session), it signals the actual values of the maximum transmission power levels that the UE is allowed to use in that geographical region. This signaling will often be useful, since the maximum output power can vary depending on the geographical region and the frequency band. For instance, the Federal Communications Commission (in the U.S.) and the European Communications Office each provide a differing set of limits for various unlicensed frequency bands. A table comparing some of these limits is given in Figure 3.

In any of the embodiments discussed above, the UE may be configured to signal its preferences regarding being allocated in unlicensed and licensed bands. The preference can be expressed, for example, in terms of a willingness factor that indicates how willing the UE is to be allocated in licensed spectrum (potentially at the expense of higher charges) and/or a willingness factor indicating how willing the UE is to be allocated in (a specific) unlicensed spectrum. Each of these factors has a predefined meaning that the RAN takes into account when deciding on the frequency band allocation for a specific UE.

There can be various types and degrees of preferences. A few different approaches are described here; those skilled in the art will appreciate that variations of these might also be used, or that two or more of the following approaches might be combined, in some embodiments. One approach uses an "Unlicensed Willingness Factor," or "UWF," that indicates the UE's preferences regarding allocations to unlicensed spectrum. For instance, in one implementation: UWF = 1 might indicate that the UE does not accept unlicensed allocation under any circumstances; UWF = 2 indicates that the UE does not accept unlicensed allocation unless the interference remains under a predefined threshold; UWF = 3 indicates that the UE can only accept unlicensed spectrum in case of congestion in the licensed band; UWF = 4 indicates that the UE accepts unlicensed spectrum allocation unconditionally; and UWF = 5 indicates that UE prefers a particular unlicensed band (e.g., the UE indicates that it can be served better in unlicensed band A, based on the current signal quality). Of course, other values might be used to signal any of these conditions; any given implementation might use a subset or a superset of these choices.

In these and other implementations the UE might be configured to signal a "Unlicensed RAT Willingness Factor," or "URWF," indicating the acceptability of an assignment to a particular radio access technology (RAT) in an unlicensed band. In one implementation, for example: URWF = 1 indicates that the UE does not accept unlicensed allocation for a particular RAT under any circumstances; URWF = 2 indicates that the UE does not accept unlicensed allocation using a particular RAT unless the interference remains under a predefined threshold; URWF = 3 indicates that the UE can only accept unlicensed spectrum in case of congestion in the licensed band for a particular RAT; URWF = 4 indicates that the UE accepts unlicensed spectrum allocation unconditionally for all RATs; and URWF = 5 indicates that UE prefers a particular unlicensed band for a particular RAT. Again, other values might be used to signal any of these conditions, and/or any given implementation might use a subset or a superset of these choices. Some embodiments might use both a UWF and a URWF.

In still other implementations, the UE might use an "Unlicensed Service Willingness Factor," or "USWF," indicating the acceptability of an assignment to an unlicensed band for a particular type of service. Thus, for example: USWF = 1 indicates that the UE does not accept unlicensed allocation for a particular service under any circumstances; USWF = 2 indicates that the UE does not accept unlicensed allocation unless the interference remains under a predefined threshold for a particular service; USWF = 3 indicates that the UE can only accept unlicensed spectrum in case of congestion in the licensed band for a particular service; USWF = 4 indicates that the UE accepts unlicensed spectrum allocation unconditionally for all services; and USWF = 5 indicates that UE prefers a particular unlicensed band for a particular service. Once more, other values might be used to signal any of these conditions, and/or any given implementation might use a subset or a superset of these choices. Some embodiments might use some or all of the UWF, URWF, and USWF. In these embodiments, UWF can be viewed as a general willingness factor. In the absence of a URWF and/or USWF, the RAN (e.g., the serving radio network node in licensed band) can assume that the UWF applies for all RATs and services.

As can be seen in Figure 1, a possible deployment scenario involves physically separate base stations operating in the licensed and unlicensed bands. In fact, it is possible that different low-power access points covering different geographical areas operate in different unlicensed bands. In such a situation, it is desirable that the macro base station provides assistance data to a UE about the available unlicensed bands in a given specific geographical region. This allows the UE to indicate its preferences to the RAN in view of the actual environment.

In some systems, the macro base station successively builds up and maintains a database containing information on one or more unlicensed access points in the region, and their associated frequency bands. The information needed to build the data base can be acquired by the macro network in several different ways.

In one approach, the macro network obtains the information via backhaul communication from each access point. For instance, each access point operating in an unlicensed band may be configured to send "ON" and "OFF" flags to the macro network, via a backhaul network (e.g., the Internet), when the access point is activated or turned off, respectively. Upon receipt of these flags, the macro network updates its database with regard to the active access points in the region. The macro network may also maintain a list of potential active access points based on historical information. For instance if a given access point is frequently active then it might be included in the list of potential access points, even though it may not be currently available. In some embodiments, one or more access points might also provide additional information for storing in the macro network's database, including: geographical information, such as the access point's location; an indicator of how much of the unlicensed band is currently being used by the access point; information regarding the current load in absolute terms (e.g., number of active users) or in relative terms (e.g. high load, medium load, low load, etc.); information regarding the interference level (e.g., in terms of signal strength) in the corresponding unlicensed band.

In another approach, which may be used instead of or combined with the previous approach, the database maintained by the macro network is assembled and/or updated based on measurements performed by UEs. Thus, UEs that performed measurements and found an operating base station or access point in an unlicensed band may be configured to report the operating frequency band and a geographical position to the macro base station, which in turn builds and maintains the data base. A multi-RAT capable UE may provide information about all possible base stations based on different RATs. In some cases, the UE may also estimate the received quality (e.g. RSRQ) from the identified base stations in unlicensed bands and report them to the macro network. The quality measurements reflect the system load or interference level experienced under different base stations or access points operating under unlicensed bands. The macro network can use statistics from several UEs over a particular time period to characterize the overall interference in a particular unlicensed band. The macro network can also apply this load/interference situation to other base stations/access points operating in unlicensed bands, in some cases. However this information will generally need to be regularly updated from new reports.

In yet another approach, the macro base stations or other network nodes such as relay nodes have means to scan and perform measurements over unlicensed bands. If there are strong received signals from the unlicensed bands then this information can be used to build or update the database. The measurement can be quite complex and sophisticated, such as signal strength of pilot signals, or it can be a simpler measurement like total received interference over a certain unlicensed band. Of course, the former will more accurately detect the absence or presence of unlicensed operation. This approach can be used when the unlicensed bands are operating within the coverage of a base station, such as might occur with a pico base station or home base station.

The interference-related data that is maintained by the macro base station can be used for handover purposes. In some embodiments, the interference data that is stored in the macro base station can be used to make an interference map of the unlicensed bands in the geographical area covered by the macro base station, which might be used for long-term load balancing.

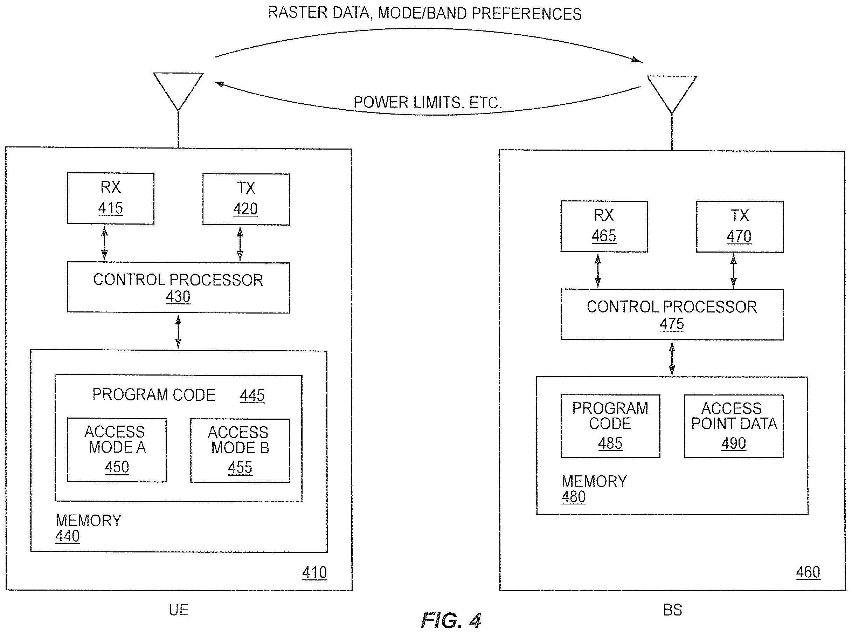

With the above described techniques in mind, those skilled in the art will appreciate that Figure 4 provides a block diagram of the functional elements of a mobile terminal, or UE 410, as well as a base station 460. These units, or units having functional elements similar to these, can be configured to carry out one or more of the techniques described above.

UE 410, in particular, comprises a receiver (RX) circuit 415, a transmit (TX) circuit 420, and a control processor 430. These radio circuits and control circuits may be configured according to conventional means to implement one or several wireless communications standards, such as GSM/GPRS/EDGE, W-CDMA, HSPA, LTE, etc. Furthermore, these components may be configured to implement one or more of these or other standards for operation in unlicensed spectrum, such as one or more of the IEEE 802.11 family of standards for wireless local-area network (WLAN) communications. In the pictured embodiment, the UE supports at least two different radio access modes; thus, memory 440 includes program code 445, which in turn includes program instructions for access mode A 450 and access mode B 455. These two access modes may correspond to distinct radio access technologies (e.g., LTE and 802.11 g WLAN), or to the same radio access technologies, but where one radio access mode is adapted for use in an unlicensed band. Of course, control processor 430 is configured for various additional functionalities via program code 445, such as higher layer protocols (e.g., Internet Protocol, SIP, or the like), communication applications, user interface functionality, etc.

Base station (BS) 460 likewise includes a receiver (RX) circuit 465, transmit (TX) circuit 470, and control processor 475. Again, these radio circuits and control circuits may be configured generally according to conventional means to implement one or more wireless communication standards, such as the 3GPP LTE standards. Control processor 475 is configured with program code 485, stored in memory 480, and also has access to a database of access point data 490. Memory 480 (like memory 440 in UE 410) may comprise one or several types of physical memory units, including RAM, ROM, flash memory, optical and/or magnetic storage devices, and the like.

Assuming that UE 410 and BS 460 each support a common standard, such as LTE, then UE 410 can "attach" to BS 460 using conventional techniques, and establish communications with and through BS 460. The communications to and from BS 460 include control signaling, which includes conventional control signaling according to the underlying wireless standard as well as the additional signaling described herein. As pictured in Figure 4, that additional signaling can include, on the uplink, raster frequency data, as well as mode and/or band preference indications. Raster frequency data, as discussed above, indicates a tuning capability of the wireless communication device in one or more frequency bands, such as a frequency band utilized for unlicensed communications. In this case, for example, the raster frequency data can be configured to reference a tuning capability for UE 410 with regards to operating in an unlicensed frequency band using the UE's WLAN capability. While the raster frequency data might take any one of a number of formats, as discussed above, in some embodiments it can comprise a single frequency index and a granularity indicator. For instance, the raster frequency data can comprise a first parameter that specifies or indexes a low-end of a frequency band (e.g., an unlicensed frequency band used for WLAN operation, such as the Industrial, Scientific, and Medical, or ISM, bands specified internationally), as well as a second parameter that specifies or indexes a step size, such as 100 kHZ.

On the downlink, additional signaling data discussed herein includes device configuration parameters related to operation of the wireless device in unlicensed frequency bands. Thus, for instance, once BS 460 is informed of the tuning capabilities of UE 410, BS 460 can provide UE 410 with commands and configuration data related to taking measurements in one or more of these unlicensed frequency bands or operating in those bands. As pictured in Figure 4, this configuration data may include power limits, in some embodiments, as unlicensed bands typically have tighter limits on emissions by portable devices, which limits can vary from jurisdiction to jurisdiction. Other device configuration parameters that can be signaled to the UE related to operations in unlicensed bands can include tuning resolutions, e.g., for scanning and/or measurement purposes, instructions for taking measurements, mobility-related instructions such as handovers to an unlicensed band, etc.

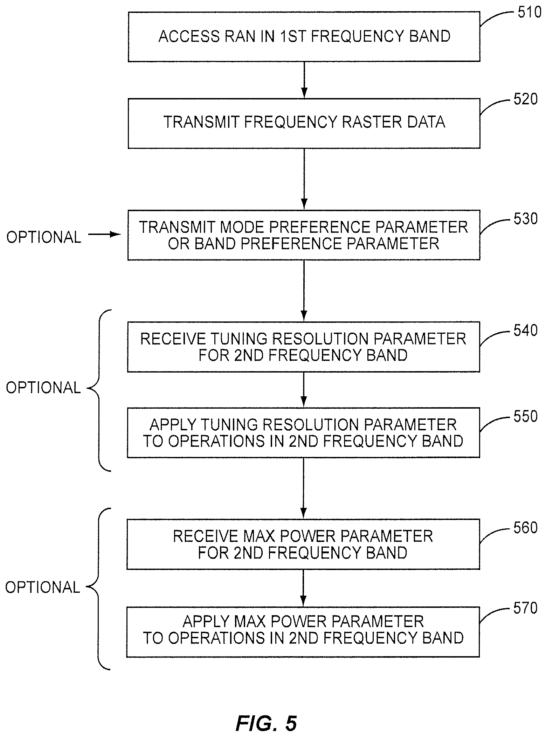

In view of the framework and apparatus discussed above, Figure 5 will be readily understood to provide a process flow diagram for a method that involves some of the techniques previously described. The process flow of Figure 5 may be implemented in wireless handset like UE 410, for example, or a similar device configured to operate in at least first and second frequency bands according to at least one radio access mode. Either or both of the first and second frequency bands may be unlicensed frequency bands. However, it is expected that the pictured method (and the other techniques discussed herein) are particularly useful, as discussed earlier, in the context of a device initially operating in a standards-based radio access network, using a licensed frequency band, Using the techniques described here, the wireless communication device can communicate its capabilities in other frequency bands, whether licensed or not.

The illustrated method begins, as shown at block 510, with accessing a radio access network (RAN) using a first radio access mode and the first frequency band. As discussed above, this is typically done according to conventional means, for example in accordance with wireless telecommunications standards such as the 3GPP LTE standards.

As shown at block 520, after attaching to the RAN, the wireless communication device transmits frequency raster data to the RAN. This frequency raster data corresponds to the second band, indicates a tuning capability of the wireless communication device, and comprises at least a first frequency index and a granularity indicator. In some embodiments, the wireless communication device is configured to operate in a second radio access mode in the second frequency band, which may be an unlicensed band; this second radio access mode may utilize a different radio access technology than that used for the first frequency band, such as a WLAN technology rather than a WAN technology. Accordingly, in these embodiments the first frequency index and the granularity indicator correspond to this second radio access mode.

In any case, the granularity indicator may indicate a frequency-step size that differs from the frequency-step size used in the first frequency band. For instance, the frequency raster for E-UTRA is 100 kHz, indicating a 100 kHz step size. However, the wireless communication device may be capable of using a smaller or larger step size in an unlicensed band - this differing step size can be communicated to the RAN via the granularity indicator.

The frequency raster data can be communicated in any of a variety of formats. In some embodiments, for instance the granularity indicator directly specifies a raster granularity. Of course, this value may be encoded, thus a granularity indicator of "1" may correspond to a 100kHz raster, while a "2" specifies a 200 kHz, etc. In some embodiments, the granularity indicator may comprise an index to one of several pre-determined frequency rasters. For instance, four different pre-determined frequency rasters, e.g., 100 KHz, 200 KHz, 300 KHz and 400 KHz, can be identified by raster identities 0, 1, 2 and 3. In the event the mobile terminal supports raster 200 KHz, it will report the identifier # 1 to the radio access network, using the first radio access mode and the first frequency band. In case the UE supports the all the pre-defined raster then it may send another pre-determined identifier (e.g., # 4), indicating that all possible frequency raster points are supported when operating on the second frequency band.

Still another possibility is that one or more basic raster granularities and a set of scaling factors are pre-defined for operation in a second frequency band. In this case, the granularity indicator may comprise a scaling factor, allowing the UE to indicate its frequency raster (applicable to the UE operation on the second frequency band) with fewer signaling overheads. For instance, the UE can report only the scaling factor, which scales up or down the basic pre-defined raster. Hence the wireless communication device signals or indicates its supported raster by the virtue of only a scaling factor, in some embodiments. The scaling factor can be an integer or even non-integer value. In still other embodiments, these approaches may be combined, so that the wireless communication device signals two parameters, a first parameter indicating one of a pre-determined set of base raster granularities, and another indicating a scaling factor to be applied to the selected raster granularity.

In some, but not all, embodiments, the wireless communication device may be configured to indicate a mode preference, a frequency band preference, or both, to the RAN. This is shown at block 530, where the wireless communication device transmits a mode preference parameter, a band preference parameter, or both, to the wireless network. As discussed above, these preferences may be coded in a variety of ways, and may indicate the wireless device's capabilities or preferences regarding operation in unlicensed bands, regarding use of certain radio access technologies in certain bands, and/or regarding use of unlicensed bands and/or radio access technologies with respect to particular services.

The wireless communication device may also receive device configuration parameters and/or instructions from the wireless network. One example of this is shown in blocks 540 and 550. As indicated at block 540, the wireless communication device receives a tuning resolution parameter for the second frequency band; this tuning resolution parameter may indicate, for example, a scanning step size that differs from that used in scanning the first frequency band. As with the granularity indicator discussed above, the tuning resolution parameter may indicate the resolution directly, or may comprise an index to one of a pre-determined set of tuning resolutions. Still other embodiments may employ a scaling factor, for application by the wireless communication device to a pre-defined base tuning resolution. Thus, for example, the radio access network can use the same pre-defined identifiers discussed above, with respect to block 530, to configure the device to operate with a particular frequency raster provided the device supports the configured frequency raster when operating on the second frequency band. As shown at block 550, this tuning resolution parameter is subsequently applied to one or more operations in the second frequency band, such as scanning for pilot signals or control channels, taking signal strength (such as the reference received signal power, or RSRP, in E-UTRAN systems, or the common pilot channel received signal code power, or CPICH RSCP, in UTRAN systems) or other signal quality measurements (e.g., reference signal received quality, RSRQ, in E-UTRAN systems, or CPICH Ec/No in UTRAN systems), cell identification, handovers to a control channel or access channel, etc. Other possible operations involving the tuning resolution parameter include, but are not limited to, frequency synchronization, symbol level synchronization, slot synchronization, sub-frame synchronization, frame synchronization, tuning to a common control channel (e.g., physical broadcast channel, PBCH, in E-UTRAN) or user-specific control channel (e.g., physical downlink control channel, PDCCH, in E-UTRAN), and tuning to an access channel (e.g., PDCCH in E-URAN or Acquisition Indicator Channel, AICH, in UTRAN, containing the random access responses sent by the radio access network to the UE). Even the access to the user-specific data channel such as PDSCH in E-UTRAN or HS-DSCH in UTRAN requires that the mobile terminal is properly tuned to the appropriate frequency over which the radio access network operates.

Another example of device configuration parameters that might be received from the RAN is shown at blocks 560 and 570. As shown at block 560, the wireless communication device receives a parameter indicating the maximum power allowed in the second frequency band. This maximum power parameter is subsequently applied to operations in the second frequency band, as shown at block 570. This approach can be used to ensure that the wireless communication device remains compliant with various limits applied to unlicensed bands, especially considering that these limits can vary from one jurisdiction to another.

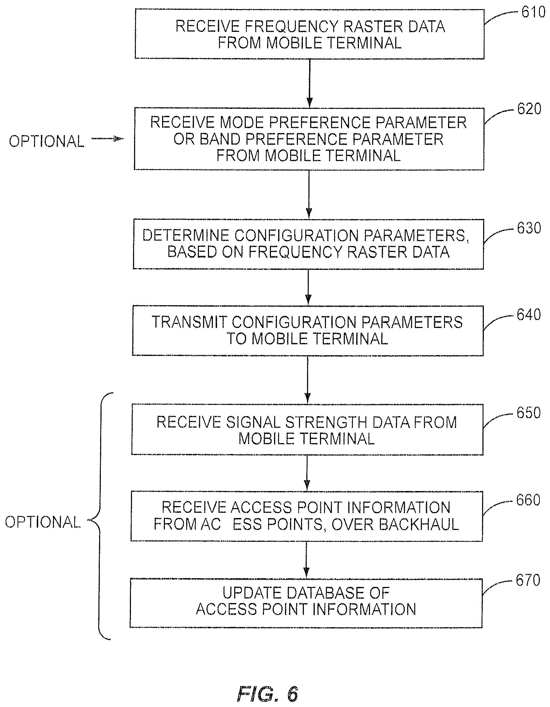

Figure 6 is a process flow diagram illustrating a method that is carried out in a node in or attached to a radio access network, such as a base station. (Those skilled in the art will appreciate that the division of functionality between the radio base station and other network nodes varies from one system to another. Thus, while this discussion generally refers only to the "base station," it should be understood that one or more of the described functions or features may appear in a separate unit, albeit a unit that is functionally connected to the actual radio base station.) The illustrated method complements the device-based method of Figure 5; thus Figure 6 illustrates a method for controlling operation of a wireless device configured to communicate with the radio access network in a first radio access mode and in a first frequency band, as well as to operate in a second frequency band not supported by the controlling base station.

As shown at block 610, the pictured method begins with the receiving of frequency raster data from an attached mobile terminal. As discussed above, this frequency raster data corresponds to the second band supported by the mobile terminal, indicates a tuning capability of the mobile terminal, and comprises at least a first frequency index and a granularity indicator. In some embodiments, the mobile terminal is configured to operate in a second radio access mode in the second frequency band, which may be an unlicensed band; this second radio access mode may utilize a different radio access technology than that used for the first frequency band, such as a WLAN technology rather than a WAN technology. Accordingly, in these embodiments the first frequency index and the granularity indicator correspond to this second radio access mode.

In some embodiments, as shown at block 620, the RAN node receives a mode preference parameter, a band preference parameter, or both, from the wireless device. Again, as discussed above, these preferences may be coded in a variety of ways, and may indicate the mobile terminal's capabilities or preferences regarding operation in unlicensed bands, regarding use of certain radio access technologies in certain bands, and/or regarding use of unlicensed bands and/or radio access technologies with respect to particular services.

The RAN uses the frequency raster data (and the preference parameters, if available) to determine device configuration parameters, as shown at block 630. These parameters are transmitted to the mobile terminal, as shown at block 640. These parameters may include any of the configuration parameters or instructions discussed above. For instance, the RAN may transmit to the mobile terminal a tuning resolution parameter for the second frequency band; as discussed above, this tuning resolution parameter may indicate a scanning step size for use in the second frequency band that differs from that used in scanning the first frequency band. Similarly, the RAN may transmit a parameter indicating the maximum power allowed in the second frequency band; again, this maximum power may differ (substantially, in some cases) from that allowed in the first frequency band, especially when the second frequency band corresponds to unlicensed spectrum, and/or when operation in the second frequency band is according to a different radio access technology.

The device configuration parameters transmitted to the mobile terminal can include instructions such as an assignment to operation in the second frequency band, and/or an assignment to operate in a second radio access mode (such as according to a different radio access technology). In some embodiments, these assignments may be based on an evaluation of mode preference parameters or band preference parameters received from the mobile terminal.

A base station or other node in or attached to the radio access network may be configured to maintain a database of access point capabilities for access points corresponding to the second frequency band (and/or a second access mode). Thus, for example, a base station may be aware of WLAN hot-spots within or adjoining the base station's coverage area. Updates to the database can be handled in a number of different ways. A few examples are illustrated in Figure 6. First, as shown at block 650, the base station or other radio access node can receive signal strength data for the second frequency band as reported by the mobile terminal. This data can be consolidated with data reported from other terminals, and may be combined with location data from the mobile terminals. Thus, the base station is able to predict the availability and potential quality of one or more access points from this data.

Additional information may be received directly from the access points themselves, via a backhaul connection. This is shown at block 660. The access points can report a variety of data, including availability data (e.g., whether the access point is on or off), location data, loading/usage data, and the like. This data, along with the signal strength data reported from mobile terminals, is used to update a database of access point information. In some embodiments, the device configuration parameters discussed above are selected in view of this database.

The methods illustrated in Figures 5 and 6, and the variants thereof described herein, can be implemented on devices and systems like the UE 410 and BS 460 of Figure 4. In some embodiments, these methods are implemented with one or more processors (e.g., one or more microprocessors, microcontrollers, digital signal processors, or the like) configured with appropriate program instructions, in the form of software or firmware. In some embodiments, one or more functions may be carried out by special-purpose hardware, e.g., under the control of a programmed processor. Thus, the skilled systems designer will appreciate that the present invention may be carried out in other ways than those specifically set forth herein without departing from essential characteristics of the invention. The present embodiments are therefore to be considered in all respects as illustrative and not restrictive, and all changes coming within the scope of the appended claims are intended to be embraced therein.

**Claims**

1.  A method in a UE (410) configured to operate at least in a first frequency band using a first radio access mode and in a second frequency band using a second radio access mode, wherein the method comprises accessing (510) a radio access network via a base station (460) using the first radio access mode and the first frequency band, wherein the first frequency band is a licensed frequency band, **characterized in that** the method further comprises:

    transmitting (520) frequency raster data to the radio access network, wherein the frequency raster data corresponds to the second frequency band, indicates a tuning capability of the UE (410) and comprises at least a first frequency index and a granularity indicator wherein the first frequency index and the granularity indicator correspond to the second radio access mode, the granularity indicator indicating a frequency-step size that differs from a frequency-step size used in the first frequency band, wherein the second frequency band corresponds to unlicensed spectrum, and is not supported by the base station (460), wherein the second radio access mode utilizes a different radio access technology than that used for the first frequency band; and
    applying (540, 550, 560, 570) one or more device configuration parameters received from the radio access network based on the transmitted frequency raster data.

2.  The method of claim 1, wherein a tuning capability corresponding to the first radio access mode and the first frequency band comprises a pre-determined first frequency-step size, and wherein the granularity indicator corresponds to a second frequency-step size differing from the first frequency-step size.

3.  The method of any of claims 1-2, wherein the granularity indicator comprises an index to one or more of a plurality of pre-determined raster granularities.

4.  The method of any of claims 1-2, wherein the granularity indicator comprises a scaling factor for application to a pre-determined raster granularity.

5.  The method of any of claims 1-4, wherein the first frequency index indicates a first end of the second frequency band and wherein the frequency raster data further comprises a second frequency index indicating a second end of the second frequency band.

6.  The method of any of claims 1-5, wherein receiving and applying (540, 550, 560, 570) one or more device configuration parameters comprises:

    receiving (540) a tuning resolution parameter at the UE (410), from the radio access network; and
    applying (550) the tuning resolution parameter to one or more operations of the UE (410) in the second frequency band.

7.  A method, performed by a base station (460) in a radio access network, for controlling operation of a UE (410) configured to communicate with the base station (460) in the radio access network in a first radio access mode and in a first frequency band and further configured to operate in a second frequency band using a second radio access mode, wherein the first frequency band is a licensed frequency band, **characterized in that** the method comprises:

    receiving (610) frequency raster data from the UE (410), wherein the frequency raster data corresponds to the second frequency band, indicates a tuning capability of the UE (410), and comprises at least a first frequency index and a granularity indicator wherein the first frequency index and the granularity indicator correspond to the second radio access mode, the granularity indicator indicating a frequency-step size that differs from a frequency-step size used in the first frequency band, wherein the second frequency band corresponds to unlicensed spectrum, and is not supported by the base station (460), wherein the second radio access mode utilizes a different radio access technology than that used for the first frequency band;
    determining (630) one or more device configuration parameters based on the frequency raster data; and
    transmitting (640) the one or more device configuration parameters to the UE (410).

8.  The method of claim 7, wherein the one or more device configuration parameters comprise a maximum-power parameter indicating a first transmitter-power limit that corresponds to the second frequency band and that differs from a pre-determined transmitter power-limit corresponding to the first radio access mode and the first frequency band.

9. The method of any of claims 7-8, wherein the one or more device configuration parameters comprise a tuning resolution parameter for application by the UE (410) to one or more operations in the second frequency band.

10. A UE (410) configured to operate at least in a first frequency band using a first radio access mode and in a second frequency band using a second radio access mode, the UE (410) comprising a receiver (415), transmitter (420), and control processor (430), wherein the control processor (430) is configured to access a radio access network using a first radio access mode and the first frequency band, wherein the first frequency band is a licensed frequency band, and **characterized in that** the control processor (430) is configured to:

transmit frequency raster data from the UE (410) to the radio access network, using the transmitter (420), wherein the frequency raster data corresponds to the second frequency band, indicates a tuning capability of the UE (410), and comprises at least a first frequency index and a granularity indicator wherein the first frequency index and the granularity indicator correspond to the second radio access mode, the granularity indicator indicating a frequency-step size that differs from a frequency-step size used in the first frequency band, wherein the second frequency band corresponds to unlicensed spectrum, and is not supported by the base station (460), wherein the second radio access mode utilizes a different radio access technology than that used for the first frequency band; and
apply (540, 550, 560, 570) one or more device configuration parameters received from the radio access network based on the transmitted frequency raster data.

11. A base station (460) for controlling operation of a UE (410) configured to communicate with the radio access network in a first radio access mode in a first frequency band and further configured to operate in a second frequency band using a second radio access mode, wherein the first frequency band is a licensed frequency band, **characterized in that** the base station (460) is configured to:

receive frequency raster data from the UE (410), wherein the frequency raster data corresponds to the second frequency band, indicates a tuning capability of the UE (410), and comprises at least a first frequency index and a granularity indicator wherein the first frequency index and the granularity indicator correspond to the second radio access mode, the granularity indicator indicating a frequency-step size that differs from a frequency-step size used in the first frequency band, wherein the second frequency band corresponds to unlicensed spectrum, and is not supported by the base station (460), wherein the second radio access mode utilizes a different radio access technology than that used for the first frequency band;
determine one or more device configuration parameters based on the frequency raster data; and
transmit the one or more device configuration parameters to the UE (410).

**Patentansprüche**

1. Verfahren in einem Benutzergerät (UE) (410), das zum Betrieb mindestens in einem ersten Frequenzband unter Verwendung eines ersten Funkzugriffsmodus und in einem zweiten Frequenzband unter Verwendung eines zweiten Funkzugriffsmodus konfiguriert ist, wobei das Verfahren das Zugreifen (510) auf ein Funkzugriffsnetzwerk über eine Basisstation (460) unter Verwendung des ersten Funkzugriffsmodus und das erste Frequenzband umfasst, wobei das erste Frequenzband ein lizenziertes Frequenzband ist, **dadurch gekennzeichnet, dass** das Verfahren ferner umfasst:

Übertragen (520) von Frequenzrasterdaten an das Funkzugriffsnetzwerk, wobei die Frequenzrasterdaten dem zweiten Frequenzband entsprechen, eine Tuning-Fähigkeit des Benutzergeräts (410) angeben und mindestens einen ersten Frequenzindex und einen Granularitätsindikator umfassen, wobei der erste Frequenzindex und der Granularitätsindikator dem zweiten Funkzugriffsmodus entsprechen, wobei der Granularitätsindikator eine Frequenzschrittgröße angibt, die sich von einer in dem ersten Frequenzband verwendeten Frequenzschrittgröße unterscheidet, wobei das zweite Frequenzband einem unlizenzierten Spektrum entspricht und nicht von der Basisstation (460) unterstützt wird, wobei der zweite Funkzugriffsmodus eine andere Funkzugriffstechnologie als die verwendet, die für das erste Frequenzband verwendet wird; und
Anwenden (540, 550, 560, 570) eines oder mehrerer Gerätekonfigurationsparameter, die vom Funkzugriffsnetzwerk auf Grundlage der übertragenen Frequenzrasterdaten empfangen werden.

**2.** Verfahren nach Anspruch 1, wobei eine dem ersten Funkzugriffsmodus und dem ersten Frequenzband entsprechende Tuning-Fähigkeit eine vorgegebene erste Frequenzschrittgröße umfasst, und wobei der Granularitätsindikator einer zweiten Frequenzschrittgröße entspricht, die sich von der ersten Frequenzschrittgröße unterscheidet.

**3.** Verfahren nach einem der Ansprüche 1-2, wobei der Granularitätsindikator einen Index zu einer oder mehreren einer Vielzahl vorgegebener Rastergranularitäten umfasst.

**4.** Verfahren nach einem der Ansprüche 1-2, wobei der Granularitätsindikator einen Skalierungsfaktor zur Anwendung auf eine vorgegebene Rastergranularität umfasst.

**5.** Verfahren nach einem der Ansprüche 1-4, wobei der erste Frequenzindex ein erstes Ende des zweiten Frequenzbandes angibt und wobei die Frequenzrasterdaten ferner einen zweiten Frequenzindex umfassen, der ein zweites Ende des zweiten Frequenzbandes angibt.

**6.** Verfahren nach einem der Ansprüche 1-5, wobei das Empfangen und Anwenden (540, 550, 560, 570) eines oder mehrerer Gerätekonfigurationsparameter Folgendes umfasst:

Empfangen (540) eines Tuning-Auflösungsparameters am Benutzergerät (410) aus dem Funkzugriffsnetzwerk; und

Anwenden (550) des Tuning-Auflösungsparameters auf eine oder mehrere Operationen des Benutzergeräts (410) im zweiten Frequenzband.

**7.** Verfahren, ausgeführt durch eine Basisstation (460) in einem Funkzugriffsnetzwerk, zum Steuern des Betriebs eines Benutzergeräts (410), das zum Kommunizieren mit der Basisstation (460) in dem Funkzugriffsnetzwerk in einem ersten Funkzugriffsmodus und in einem ersten Frequenzband konfiguriert ist und ferner zum Betrieb in einem zweiten Frequenzband unter Verwendung eines zweiten Funkzugriffsmodus konfiguriert ist, wobei das erste Frequenzband ein lizenziertes Frequenzband ist, **dadurch gekennzeichnet, dass** das Verfahren Folgendes umfasst:

Empfangen (610) von Frequenzrasterdaten vom Benutzergerät (410), wobei die Frequenzrasterdaten dem zweiten Frequenzband entsprechen, eine Tuning-Fähigkeit des Benutzergeräts (410) angeben und mindestens einen ersten Frequenzindex und einen Granularitätsindikator umfassen, wobei der erste Frequenzindex und der Granularitätsindikator dem zweiten Funkzugriffsmodus entsprechen, wobei der Granularitätsindikator eine Frequenzschrittgröße angibt, die sich von einer in dem ersten Frequenzband verwendeten Frequenzschrittgröße unterscheidet, wobei das zweite Frequenzband einem unlizenzierten Spektrum entspricht und nicht von der Basisstation (460) unterstützt wird, wobei der zweite Funkzugriffsmodus eine andere Funkzugriffstechnologie als die verwendet, die für das erste Frequenzband verwendet wird;
Bestimmen (630) eines oder mehrerer Gerätekonfigurationsparameter auf Grundlage der Frequenzrasterdaten; und
Übertragen (640) des einen oder der mehreren Gerätekonfigurationsparameter an das Benutzergerät (410).

**8.** Verfahren nach Anspruch 7, wobei der eine oder die mehreren Gerätekonfigurationsparameter einen Maximalleistungsparameter umfassen, der eine erste Sender-Leistungsgrenze angibt, die dem zweiten Frequenzband entspricht und die sich von einer vorgegebenen Sender-Leistungsgrenze unterscheidet, die dem ersten Funkzugriffsmodus und dem ersten Frequenzband entspricht.

**9.** Verfahren nach einem der Ansprüche 7-8, wobei der eine oder die mehreren Gerätekonfigurationsparameter einen Tuning-Auflösungsparameter zur Anwendung durch das Benutzergerät (410) auf eine oder mehrere Operationen im zweiten Frequenzband umfassen.

**10.** Benutzergerät (410), das zum Betrieb mindestens in einem ersten Frequenzband unter Verwendung eines ersten Funkzugriffsmodus und in einem zweiten Frequenzband unter Verwendung eines zweiten Funkzugriffsmodus konfiguriert ist, wobei das Benutzergerät (410) einen Empfänger (415), Sender (420) und Steuerprozessor (430) umfasst, wobei der Steuerprozessor (430) zum Zugreifen auf ein Funkzugriffsnetzwerk unter Verwendung eines ersten Funkzugriffsmodus und des ersten Frequenzbandes konfiguriert ist, wobei das erste Frequenzband ein lizenziertes Frequenzband ist, und **dadurch gekennzeichnet, dass** der Steuerprozessor (430) für Folgendes konfiguriert ist:

Übertragen von Frequenzrasterdaten vom Benutzergerät (410) an das Funkzugriffsnetzwerk unter Verwendung des Senders (420), wobei die Frequenzrasterdaten dem zweiten Frequenzband entsprechen, eine Tuning-Fähigkeit des Benutzergeräts (410) angeben und mindestens einen ersten Frequenzindex und einen Granularitätsindikator umfassen, wobei der erste Frequenzindex und der Granularitätsindikator dem zweiten Funkzugriffsmodus entsprechen, wobei der Granularitätsindikator eine Frequenzschrittgröße angibt, die sich von einer in dem ersten Frequenzband verwendeten Frequenzschrittgröße unterscheidet, wobei das zweite Frequenzband einem unlizenzierten Spektrum entspricht und nicht von der Basisstation (460) unterstützt wird, wobei der zweite Funkzugriffsmodus eine andere Funkzugriffstechnologie als die verwendet, die für das erste Frequenzband verwendet wird; und

Anwenden (540, 550, 560, 570) eines oder mehrerer Gerätekonfigurationsparameter, die vom Funkzugriffsnetzwerk auf Grundlage der übertragenen Frequenzrasterdaten empfangen werden.

11. Basisstation (460) zum Steuern des Betriebs eines Benutzergeräts (410), das zum Kommunizieren mit dem Funkzugriffsnetzwerk in einem ersten Funkzugriffsmodus in einem ersten Frequenzband konfiguriert ist und ferner zum Betrieb in einem zweiten Frequenzband unter Verwendung eines zweiten Funkzugriffsmodus konfiguriert ist, wobei das erste Frequenzband ein lizenziertes Frequenzband ist, **dadurch gekennzeichnet, dass** die Basisstation (460) für Folgendes konfiguriert ist:

Empfangen von Frequenzrasterdaten vom Benutzergerät (410), wobei die Frequenzrasterdaten dem zweiten Frequenzband entsprechen, eine Tuning-Fähigkeit des Benutzergeräts (410) angeben und mindestens einen ersten Frequenzindex und einen Granularitätsindikator umfassen, wobei der erste Frequenzindex und der Granularitätsindikator dem zweiten Funkzugriffsmodus entsprechen, wobei der Granularitätsindikator eine Frequenzschrittgröße angibt, die sich von einer in dem ersten Frequenzband verwendeten Frequenzschrittgröße unterscheidet, wobei das zweite Frequenzband einem unlizenzierten Spektrum entspricht und nicht von der Basisstation (460) unterstützt wird, wobei der zweite Funkzugriffsmodus eine andere Funkzugriffstechnologie als die verwendet, die für das erste Frequenzband verwendet wird;

Bestimmen eines oder mehrerer Gerätekonfigurationsparameter auf Grundlage der Frequenzrasterdaten; und
Übertragen des einen oder der mehreren Gerätekonfigurationsparameter an das Benutzergerät (410).

## Revendications

1. Procédé mis en oeuvre dans un équipement UE (410) configuré de manière à fonctionner au moins dans une première bande de fréquences, en utilisant un premier mode d'accès radio, et dans une seconde bande de fréquences, en utilisant un second mode d'accès radio, dans lequel le procédé comprend l'étape consistant à accéder (510) à un réseau d'accès radio par l'intermédiaire d'une station de base (460), en utilisant le premier mode d'accès radio et la première bande de fréquences, dans lequel la première bande de fréquences est une bande de fréquences sous licence, **caractérisé en ce que** le procédé comprend en outre les étapes ci-dessous consistant à :

transmettre (520) des données matricielles de fréquence au réseau d'accès radio, dans lequel les données matricielles de fréquence correspondent à la seconde bande de fréquences, indiquent une capacité de syntonisation de l'équipement UE (410) et comprennent au moins un premier indice de fréquence et un indicateur de granularité, dans lequel le premier indice de fréquence et l'indicateur de granularité correspondent au second mode d'accès radio, l'indicateur de granularité indiquant une taille de pas en fréquence qui diffère d'une taille de pas en fréquence utilisée dans la première bande de fréquences, dans lequel la seconde bande de fréquences correspond à un spectre sans licence, et n'est pas prise en charge par la station de base (460), dans lequel le second mode d'accès radio utilise une technologie d'accès radio différente de celle utilisée pour la première bande de fréquences ; et
appliquer (540, 550, 560, 570) un ou plusieurs paramètres de configuration de dispositif reçus en provenance du réseau d'accès radio sur la base des données matricielles de fréquence transmises.

2. Procédé selon la revendication 1, dans lequel une capacité de syntonisation correspondant au premier mode d'accès radio et à la première bande de fréquences comprend une première taille de pas en fréquence prédéterminée, et dans lequel l'indicateur de granularité correspond à une seconde taille de pas en fréquence différente de la première taille de pas en fréquence.

3. Procédé selon l'une quelconque des revendications 1 à 2, dans lequel l'indicateur de granularité comprend un indice pour une ou plusieurs granularités parmi une pluralité de granularités matricielles prédéterminées.

4. Procédé selon l'une quelconque des revendications 1 à 2, dans lequel l'indicateur de granularité comprend un facteur d'échelle à appliquer à une granularité matricielle prédéterminée.

**5.** Procédé selon l'une quelconque des revendications 1 à 4, dans lequel le premier indice de fréquence indique une première extrémité de la seconde bande de fréquences, et dans lequel les données matricielles de fréquence comprennent en outre un second indice de fréquence indiquant une seconde extrémité de la seconde bande de fréquences.

**6.** Procédé selon l'une quelconque des revendications 1 à 5, dans lequel l'étape de réception et l'étape d'application (540, 550, 560, 570) d'un ou plusieurs paramètres de configuration de dispositif comprennent les étapes ci-dessous consistant à :

recevoir (540) un paramètre de résolution de syntonisation au niveau de l'équipement UE (410), en provenance du réseau d'accès radio ; et
appliquer (550) le paramètre de résolution de syntonisation à une ou plusieurs opérations de l'équipement UE (410) dans la seconde bande de fréquences.

**7.** Procédé, mis en oeuvre par une station de base (460) dans un réseau d'accès radio, de commande du fonctionnement d'un équipement UE (410) configuré de manière à communiquer avec la station de base (460) dans le réseau d'accès radio dans un premier mode d'accès radio et dans une première bande de fréquences, et configuré en outre de manière à fonctionner dans une seconde bande de fréquences en utilisant un second mode d'accès radio, dans lequel la première bande de fréquences est une bande de fréquences sous licence, **caractérisé en ce que** le procédé comprend les étapes ci-dessous consistant à :

recevoir (610) des données matricielles de fréquence en provenance de l'équipement UE (410), dans lequel les données matricielles de fréquence correspondent à la seconde bande de fréquences, indiquent une capacité de syntonisation de l'équipement UE (410), et comprennent au moins un premier indice de fréquence et un indicateur de granularité, dans lequel le premier indice de fréquence et l'indicateur de granularité correspondent au second mode d'accès radio, l'indicateur de granularité indiquant une taille de pas en fréquence qui diffère d'une taille de pas en fréquence utilisée dans la première bande de fréquences, dans lequel la seconde bande de fréquences correspond à un spectre sans licence, et n'est pas prise en charge par la station de base (460), dans lequel le second mode d'accès radio utilise une technologie d'accès radio différente de celle utilisée pour la première bande de fréquences ;
déterminer (630) un ou plusieurs paramètres de configuration de dispositif sur la base des données matricielles de fréquence ; et
transmettre (640) ledit un ou lesdits plusieurs paramètres de configuration de dispositif à l'équipement UE (410).

**8.** Procédé selon la revendication 7, dans lequel ledit un ou lesdits plusieurs paramètres de configuration de dispositif comprennent un paramètre de puissance maximale indiquant une première limite de puissance d'émetteur qui correspond à la seconde bande de fréquences et qui diffère d'une limite de puissance d'émetteur prédéterminée correspondant au premier mode d'accès radio et à la première bande de fréquences.

**9.** Procédé selon l'une quelconque des revendications 7 à 8, dans lequel ledit un ou lesdits plusieurs paramètres de configuration de dispositif comprennent un paramètre de résolution de syntonisation destiné à être appliqué par l'équipement UE (410) à une ou plusieurs opérations dans la seconde bande de fréquences.

**10.** Équipement UE (410) configuré de manière à fonctionner au moins dans une première bande de fréquences en utilisant un premier mode d'accès radio et dans une seconde bande de fréquences en utilisant un second mode d'accès radio, l'équipement UE (410) comprenant un récepteur (415), un émetteur (420) et un processeur de commande (430), dans lequel le processeur de commande (430) est configuré de manière à accéder à un réseau d'accès radio en utilisant un premier mode d'accès radio et la première bande de fréquences, dans lequel la première bande de fréquences est une bande de fréquences sous licence, et **caractérisé en ce que** le processeur de commande (430) est configuré de manière à :

transmettre des données matricielles de fréquence, de l'équipement UE (410) au réseau d'accès radio, en utilisant l'émetteur (420), dans lequel les données matricielles de fréquence correspondent à la seconde bande de fréquences, indiquent une capacité de syntonisation de l'équipement UE (410) et comprennent au moins un premier indice de fréquence et un indicateur de granularité, dans lequel le premier indice de fréquence et l'indicateur de granularité correspondent au second mode d'accès radio, l'indicateur de granularité indiquant une taille de pas en fréquence qui diffère d'une taille de pas en fréquence utilisée dans la première bande de fréquences, dans lequel la seconde bande de fréquences correspond à un spectre sans licence, et n'est pas prise en charge par la station de base (460), dans lequel le second mode d'accès radio utilise une technologie d'accès radio différente de celle utilisée pour la première bande de fréquences ; et
appliquer (540, 550, 560, 570) un ou plusieurs paramètres de configuration de dispositif reçus en provenance du réseau d'accès radio sur la base des données matricielles de fréquence transmises.

11. Station de base (460) destinée à commander le fonctionnement d'un équipement UE (410) configuré de manière à communiquer avec le réseau d'accès radio dans un premier mode d'accès radio dans une première bande de fréquences, et configuré en outre de manière à fonctionner dans une seconde bande de fréquences en utilisant un second mode d'accès radio, dans lequel la première bande de fréquences est une bande de fréquences sous licence, **caractérisée en ce que** la station de base (460) est configurée de manière à :

recevoir des données matricielles de fréquence en provenance de l'équipement UE (410), dans lequel les données matricielles de fréquence correspondent à la seconde bande de fréquences, indiquent une capacité de syntonisation de l'équipement UE (410), et comprennent au moins un premier indice de fréquence et un indicateur de granularité, dans lequel le premier indice de fréquence et l'indicateur de granularité correspondent au second mode d'accès radio, l'indicateur de granularité indiquant une taille de pas en fréquence qui diffère d'une taille de pas en fréquence utilisée dans la première bande de fréquences, dans lequel la seconde bande de fréquences correspond à un spectre sans licence, et n'est pas prise en charge par la station de base (460), dans lequel le second mode d'accès radio utilise une technologie d'accès radio différente de celle utilisée pour la première bande de fréquences ;
déterminer un ou plusieurs paramètres de configuration de dispositif sur la base des données matricielles de fréquence ; et
transmettre ledit un ou lesdits plusieurs paramètres de configuration de dispositif à l'équipement UE (410).

MACRO CELL
110

*FIG. 1*

E-UTRA CHANNEL NUMBERS

| E-UTRA OPERATING BAND | DOWNLINK | | | UPLINK | | |
|---|---|---|---|---|---|---|
| | $F_{DL\_low}$ (MHz) | $N_{Offs-DL}$ | RANGE OF $N_{DL}$ | $F_{UL\_low}$ (MHz) | $N_{Offs-UL}$ | RANGE OF $N_{UL}$ |
| 1 | 2110 | 0 | 0 – 599 | 1920 | 18000 | 18000 – 18599 |
| 2 | 1930 | 600 | 600 – 1199 | 1850 | 18600 | 18600 – 19199 |
| 3 | 1805 | 1200 | 1200 – 1949 | 1710 | 19200 | 19200 – 19949 |
| 4 | 2110 | 1950 | 1950 – 2399 | 1710 | 19950 | 19950 – 20399 |
| 5 | 869 | 2400 | 2400 – 2649 | 824 | 20400 | 20400 – 20649 |
| 6 | 875 | 2650 | 2650 – 2749 | 830 | 20650 | 20650 – 20749 |
| 7 | 2620 | 2750 | 2750 – 3449 | 2500 | 20750 | 20750 – 21449 |
| 8 | 925 | 3450 | 3450 – 3799 | 880 | 21450 | 21450 – 21799 |
| 9 | 1844.9 | 3800 | 3800 – 4149 | 1749.9 | 21800 | 21800 – 22149 |
| 10 | 2110 | 4150 | 4150 – 4749 | 1710 | 22150 | 22150 – 22749 |
| 11 | 1475.9 | 4750 | 4750 – 4949 | 1427.9 | 22750 | 22750 – 22949 |
| 12 | 728 | 5000 | 5000 - 5179 | 698 | 23000 | 23000 - 23179 |
| 13 | 746 | 5180 | 5180 – 5279 | 777 | 23180 | 23180 – 23279 |
| 14 | 758 | 5280 | 5280 – 5379 | 788 | 23280 | 23280 – 23379 |
| ... | | | | | | |
| 20 | 791 | 6150 | 6150 – 6449 | 832 | 24150 | 24150 – 24449 |
| 21 | 1495.9 | 7050 | 7050 – 7199 | 1447.9 | 25050 | 25050 – 25199 |
| ... | | | | | | |
| 17 | 734 | 5730 | 5730 – 5849 | 704 | 23730 | 23730 - 23849 |
| 18 | 860 | 5850 | 5850 – 5999 | 815 | 23850 | 23850 – 23999 |
| 19 | 875 | 6000 | 6000 – 6149 | 830 | 24000 | 24000 – 24149 |
| ... | | | | | | |
| 33 | 1900 | 36000 | 36000 – 36199 | 1900 | 36000 | 36000 – 36199 |
| 34 | 2010 | 36200 | 36200 – 36349 | 2010 | 36200 | 36200 – 36349 |
| 35 | 1850 | 36350 | 36350 – 36949 | 1850 | 36350 | 36350 – 36949 |
| 36 | 1930 | 36950 | 36950 – 37549 | 1930 | 36950 | 36950 – 37549 |
| 37 | 1910 | 37550 | 37550 – 37749 | 1910 | 37550 | 37550 – 37749 |
| 38 | 2570 | 37750 | 37750 – 38249 | 2570 | 37750 | 37750 – 38249 |
| 39 | 1880 | 38250 | 38250-38649 | 1880 | 38250 | 38250-38649 |
| 40 | 2300 | 38650 | 38650-39649 | 2300 | 38650 | 38650-39649 |

FIG. 2

| ECO (EUROPEAN COMMUNICATIONS OFFICE) [ERC RECOMMENDATION 70-03] | | FCC [FCC. OPERATION WITHIN THE BANDS 902-928 MHz, 2400-2483.5 MHz OR 5725-5850 MHz] | |
|---|---|---|---|
| FREQUENCY RANGE | POWER LIMIT | FREQUENCY RANGE | FIELD STRENGTH (millivolts/meters) |
| 2.400-2.4835 GHz | 100mw e.i.r.p | 902-928 MHz | 500 |
| 5.150-5.350 GHz | 200mw e.i.r.p | 2.435-2.465 GHz | 500 |
| 5.47-5.725 GHz | 1w e.i.r.p | 5.785-5.815 GHz | 500 |
| 17.1-17.3 GHz | 100mw e.i.r.p | 10.500-10.550 GHz | 2500 |
| 57-66 GHz (FIXED OUTDOOR) | 250dBm e.i.r.p | 24.075-24.175 GHz | 2500 |
| 57-66 GHz (INDOOR) | 40dBm e.i.r.p | | |

*FIG. 3*

EP 2 604 072 B1

RASTER DATA, MODE/BAND PREFERENCES

POWER LIMITS, ETC.

UE

RX
415

TX
420

CONTROL PROCESSOR
430

PROGRAM CODE    445

ACCESS
MODE A
450

ACCESS
MODE B
455

MEMORY
440

410

BS

RX
465

TX
470

CONTROL PROCESSOR
475

PROGRAM
CODE
485

ACCESS
POINT DATA
490

MEMORY
480

460

FIG. 4

EP 2 604 072 B1

*FIG. 5*

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090221290 A1

**Non-patent literature cited in the description**

- *3GPP TS 36.101, v. 9.3.0,* March 2010